# Europäisches Patentamt
## European Patent Office
## Office européen des brevets

(19)

(11) Veröffentlichungsnummer: **0 160 989**
**B1**

(12)

# EUROPÄISCHE PATENTSCHRIFT

(45) Veröffentlichungstag der Patentschrift:
12.08.87

(51) Int. Cl.⁴: **B 23 H 1/02, B 23 H 7/04**

(21) Anmeldenummer: **85105667.1**

(22) Anmeldetag: **09.05.85**

(54) **Impulsgenerator zur funkenerosiven Metallbearbeitung.**

(30) Priorität: **11.05.84 CH 2354/84**
**28.05.84 DE 3419945**

(43) Veröffentlichungstag der Anmeldung:
**13.11.85 Patentblatt 85/46**

(45) Bekanntmachung des Hinweises auf die Patenterteilung:
**12.08.87 Patentblatt 87/33**

(84) Benannte Vertragsstaaten:
**CH DE FR GB IT LI LU SE**

(56) Entgegenhaltungen:
**DE-C-2 547 767**
**DE-C-2 735 403**

(73) Patentinhaber: **AG für industrielle Elektronik AGIE Losone bei Locarno, CH- 6616 Losone/Locarno (CH)**

(72) Erfinder: **Bühler, Ernst, Salita degli Orti 5, CH- 6616 Losone (CH)**
Erfinder: **Rullo, Antonio, Via Monte Ceneri 18A, CH- 6512 Giubiasco (CH)**

(74) Vertreter: **EGLI- EUROPEAN PATENT ATTORNEYS, Widenmayerstrasse 5, D-8000 München 22 (DE)**

LIBER, STOCKHOLM 1987

## Beschreibung

Die Erfindung betrifft einen Impulsgenerator zur funkenerosiven Metallbearbeitung gemäss dem Oberbegriff des Patentanspruchs 1.

In der Funkenerosionstechnik sind verschiedenartigste Impulsgeneratoren weit verbreitet. Solche mit hohem Wirkungsgrad sind besonders in der Produktionstechnik gefragt, da sich hier Stromkosten, Wärmeanfall sowie grosse und schwere Geräte äusserst negativ auswirken.

Es sind bereits verschiedenartige Impulsgeneratoren für die funkenerosive Metallbearbeitung bekannt, welche jedoch alle mit Nachteilen behaftet sind, so dass sich Verbesserungen des Wirkungsgrades nicht mehr ohne weiteres erzielen lassen. Es sind auch Impulsgeneratoren bekannt geworden, welche nicht mehr die sonst allgemein üblichen Lastwiderstände zur Stromregulierung verwenden. Eine Lösung wurde durch das deutsche Patent Nr. 25 47 767 offenbar. Dort wird eine Generatorschaltung vorgeschlagen welche beliebig geformte Stromimpulse liefern kann, indem eine Regelvorrichtung dafür sorgt, dass sich der Impulsstrom immer im Bereich zwischen zwei vorgegebenen Hüllkurven befindet.

Diese Schaltung wäre an sich geeignet, Wirkungsgrade über 60 % zu erzielen, hat jedoch den grossen Nachteil dass höhere Leerlaufspannungen an der Funkenstrecke nur durch zugeschaltete Impulsgeneratoren mit Lastwiderständen erreichbar sind. Auch besonders scharfe Impulse wie sie von der Technologie besonders gefordert werden, erfordern eine spezielle Schnellabschaltvorrichtung, welche ihrerseits die gesamte abzuführende Energie in einem Lastwiderstand verbrennt. Dadurch fällt der Gesamtwirkungsgrad dieser Art Impulsgeneratoren auf uninteressante Werte ab.

Aus der deutschen Patentschrift 27 35 403 ist ein Impulsgenerator für das Drahtschneiden bekannt geworden, welcher bei besonders kurzen Impulsen, von 1 Mikrosekunde und kürzer, hohe Impulsströme von mehreren hundert Ampere liefern kann.

Dieser Generatortyp ermöglicht zwar eine hohe Produktivität bei guter Genauigkeit. Bei der üblichen Auslegung mit einer Gleichspannungsquelle von ungefähr 300 Volt ist der Generatorwirkungsgrad wegen der vorhandenen Lastwiderstände deutlich unter 10 %. Ein solcher Wirkungsgrad ist für breitere Anwendung in Produktionsanlagen untragbar.

Es ist Aufgabe der Erfindung, den gattungsgemässen Impulsgenerator derart weiter zu entwickeln, dass er einen besonders hohen Wirkungsgrad aufweist und möglichst universell für alle vorkommenden Bearbeitungsarten in der Funkenerosionstechnik anwendbar ist.

Diese Aufgabe wird durch den Gegenstand gemäss Anspruch 1 gelöst.

Der erfindungsgemässe Impulsgenerator hat den Vorteil, dass er als kleines und leichtes Gerät herstellbar sowie leicht ansteuerbar ist, insbesondere in Verbindung mit automatischen Prozessleitsystemen. Hinzu kommt, dass er sich zur Erzeugung unterschiedlichster Typen von Erosionsimpulsen eignet.

Anhand von Figuren werden im folgenden bevorzugte Ausführungsformen der Erfindung beschrieben. Es zeigen:

Fig. 1 Prinzipschaltung eines Impulsgenerators,

Fig. 1a, 1b Impulsformen bei zwei möglichen Betriebsarten,

Fig. 2 ein zweites Ausführungsbeispiel,

Fig. 2a, 2b Impulsformen dieser Variante bei zwei möglichen Betriebsarten,

Fig. 3 ein drittes Ausführungsbeispiel,

Fig. 3a, 3b, 3c einzelne Impulsformen dieser Variante,

Fig. 4 ein viertes Ausführungsbeispiel für beliebig lang dauernde Leerlaufimpulse, und

Fig. 5 ein fünftes Ausführungsbeispiel mit galvanischer Trennung des Entladekreises.

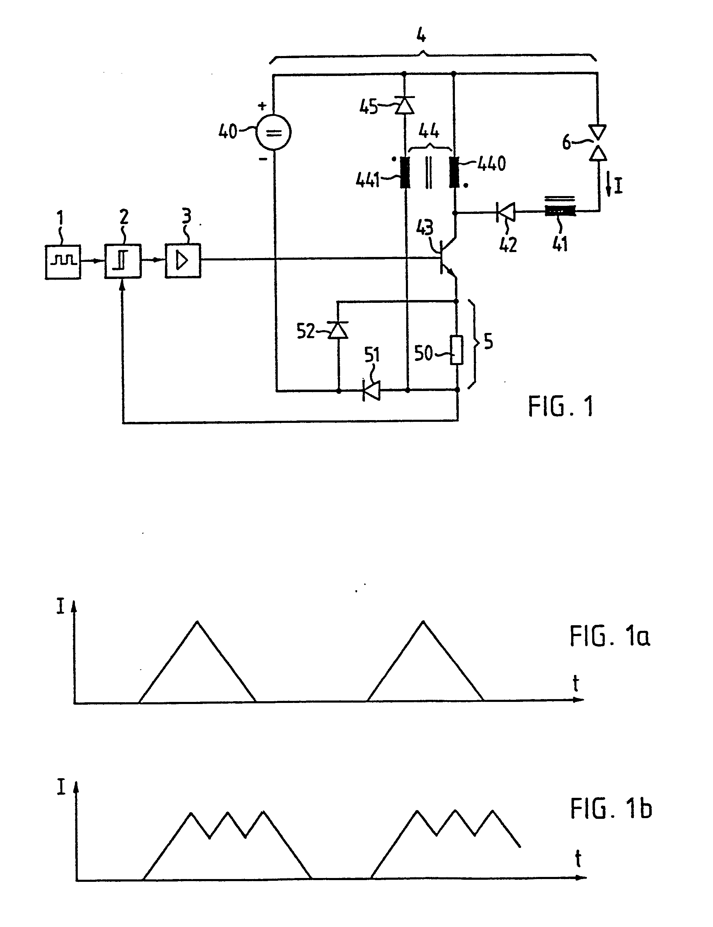

In Fig. 1 erkennt man das Grundprinzip der Schaltung. Eine Gleichspannungsquelle 40 wird über eine Induktivität 41, einem Stromsensor 50 und ein Schaltelement 43 auf die Funkenstrecke 6 geschaltet. Dabei ist die Stromanstiegsgeschwindigkeit in Ampere/Mikrosekunde des Stromes I proportional zur Spannung in Volt der Gleichspannungsquelle 40 minus der Funkenspannng über der Funkenstrecke 6, und umgekehrt proportional zur Induktivität 41 in Mikrohenry. Man kann somit die Stromanstiegsgeschwindigkeit des Impulses sowie die Leerlaufspannung des Generators frei bestimmen. Eine obere Grenze ergibt sich nur durch die jedenfalls vorhandene Induktivität der Zuleitungskabel der Funkenstrecke 6 welche in die Berechnung nach üblichen Methoden einbezogen werden muss.

Die Meßschaltung 5 ermöglichst eine verzögerungsfreie Erfassung des Stromes 1. Es sind hier zwei Dioden 51, 52 für den Fall vorgesehen, dass im Stromsensor 50 auch der abfallende Teil des Stromes 1 gemessen werden soll. Der Rekuperationsstrom wird dann gezwungen, vom Minuspol der Gleichspannungsquelle 40, über die Diode 52, den Stromsensor 50 und eine (zweite) Wicklung 441 eines Hochfrequenztransformators 44 zu fliessen. Das Meßsignal wird zu einem Vergleicher 2 zurückgeführt. Es hat damit dieselbe Form wie in der Fig. 1a, 1b dargestellte Strom 1. Für Impulse nach Fig. 1a sind die Dioden (51, 52) nicht erforderlich, da nur der Maximalwert des Stromes 1 von Interesse ist. Der Stromsensor kan aus einem Stromwandler bestehen, oder besser aus einem Meßwiderstand, wie er in der deutschen Patentanmeldung P 34 05 442.1 des Anmelders vorgeschlagen wird.

Im Vergleicher 2 wird das Meßsignal mit dem von einem Sollwertgenerator 1 ankommenden Sollwert verglichen, und wenn jenes den Sollwert überschreitet, wird über einen Treiber 3 das Schaltelement 43 ausgeschaltet. Der dem Treiber 3 nachgeschaltete Abschnitt des Impulsgenerators wird Generatorabschnitt 4 genannt. Sollwertgeneratoren 1, Vergleicher 2 und Treiber 3 sind in der vorgenannten deutschen Auslegeschrift 25 47 767 ausführlich beschrieben. Diese sind auch für die vorliegende Ausführung anwendbar.

Das Schaltelement 43 kann ein beliebiger schneller elektronischer Schalter sein, beispielsweise ein Bipolartransistor, ein GTO oder ein MOSFET.

Ist der Stromfluss über das Schaltelement 43, nun unterbunden, wird die Induktivität 41 zur treibenden Energiequelle im funkenerosiven Kreis. Der Strom I kannur über eine erste Wicklung 440 des Hochfrequenztransformators 44 und die Funkenstrecke 6 fliessen. Damit wird in der zweiten Wicklung 441 eine Spannung induziert, die mindestens gleich der Spannung der Gleichspannungsquelle 40 wird, und so einen Rekuperationsstrom über eine Diode 45 zurück in die Gleichspannungsquelle 40 ermöglicht. Der grössere Teil der in der Induktivität 41 gespeicherten Energie wird dadurch in die Gleichspannungsquelle 40 zurückgeführt, der kleinere Teil dieser Energie verrichtet natürlich noch Erosionsarbeit in der Funkenstrecke 6. Die Stromabfallsgeschwindigkeit in Ampere/Mikrosekunde des Stromes I wird jetzt proportional zur in die Wicklung 440 transformierten Spannung in Volt der Gleichspannungsquelle 40, plus die Funkenspannung in Volt über der Funkenstrecke 6, und umgekehrt proportional zur Induktivätt 41 im Mikrohenry. Daraus ist ersichtlich, dass sich die Stromabfallgeschwindigkeit über das Übersetzungsverhältnis des Hochfrequenztransformators 44 frei wählen lässt. Die Konstrution des Hochfrequenztransformators 44 bedarf besonderer Sorgfalt um Streuinduktivitäten, und damit zusätzliche Spannungsbelastung des Schaltelementes 43 zu vermeiden. Dazu sei verwiesen auf das Technical Paper PC79-S-2 von Rudolf Severns, Seiten 17 bis 18, vorgetragen an der POWERCONVERSION-Konferenz 1979 in München, Deutschland. Das Schaltelement 43 ist mindestens für die Spannung der Gleichspannungsquelle 40 plus deren in die erste Wicklung 440 transformierten Spannung auszulegen.

Zur Erhöhung der Impulsleistung ist es möglich, mehrere solche Schaltungen auf eine Funkstrecke 6 parallel wirken zu lassen. Eine der Induktivität 41 in Stromflussrichtung unmittelbar nachgeschaltete Diode 42 dient dabei zur Entkopplung der einzelnen Schaltungen, und verhindert einen Rekuperationsstrom von einer Schaltung zur anderen.

Fig. 1a zeigt den zeitlichen Verlauf des Stromes I, wenn er Vergleicher 2 nur als Einpunktregler ausgelegt ist. Darunter ist beispielsweise ein Komparator zu verstehen, der nach Erreichen seiner Schaltschwelle eine bistabile Kipp-Stufe rücksetzt, und dadurch das Schaltelement 43 über den Treiber 3 bis zum nächsten Impulsbeginn ausschaltet. Fig. 1b zeigt den gleichen Verlauf mit dem Unterschied, dass in diesem Fall der Vergleicher 2 als Zweipunktregler ausgelegt ist. Es sind jetzt zwei Komparatoren vorhanden, einer für den Maximalwert, sowie einer für einen tieferen Minimalwert. Solange nun der Sollwertgenerator 1 einen Sollwert grösser als Null sendet, wird die auch hier vorhandene bistabile Kippstufe unterhalb dem Minimalwert gesetzt, und über dem Maximalwert rückgesetzt.

Bei dieser Betriebsart werden besondere Anforderungen an die Diode 45 gestellt, da sie in dem Moment, in dem das Schaltelement 43 wieder einschaltet, noch einen beträchtlichen Strom führt, und dabei naturgemäss eine Sperrverzögerungszeit aufweist. Diese Sperrverzögerungszeit sollte im Beispiel einen Richtwert von ca. 100 Nanosekunden nicht überschreiten.

Für die Dioden 51, 52 werden vorteilhafterweise Schottky-Gleichrichter verwendet, da damit die Stromleitverluste am geringsten werden, und die Sperrspannung kleiner ist als 1 Volt.

Die Gleichspannungsquelle 40 liefert normalerweise 40 bis ungefähr 1000 Volt, je nach technologischen Anforderungen, die vom jeweiligen Anwendungsfall (Material, Werkstückdicke, gewünschte Oberflächenqualität der Schnittfläche) abhängen. Die Gleichspannungsquelle kann auch variabel ausgelegt werden, wobei sich dann allerdings - wie beschrieben- auch die Impulsflanken in ihrer Steilheit ändern. Es sind damit Impulsgeneratoren mit Impulsflanken bis zu 500 Ampere/Mikrosekunde realisierbar, wodurch eine hervorragende Qualität beim Drahterodieren ermöglicht wird. Der Hochfrequenztransformator 44 hat im Beispiel ein Übersetzungsverhältnis, das nahe bei 1:1 liegt und damit symmetrische Impulsflanken ergibt.

Wird der Stromsensor 50 mit einem Messwiderstand realisiert, liegt sein Widerstandswert typisch bei 10 Milliohm.

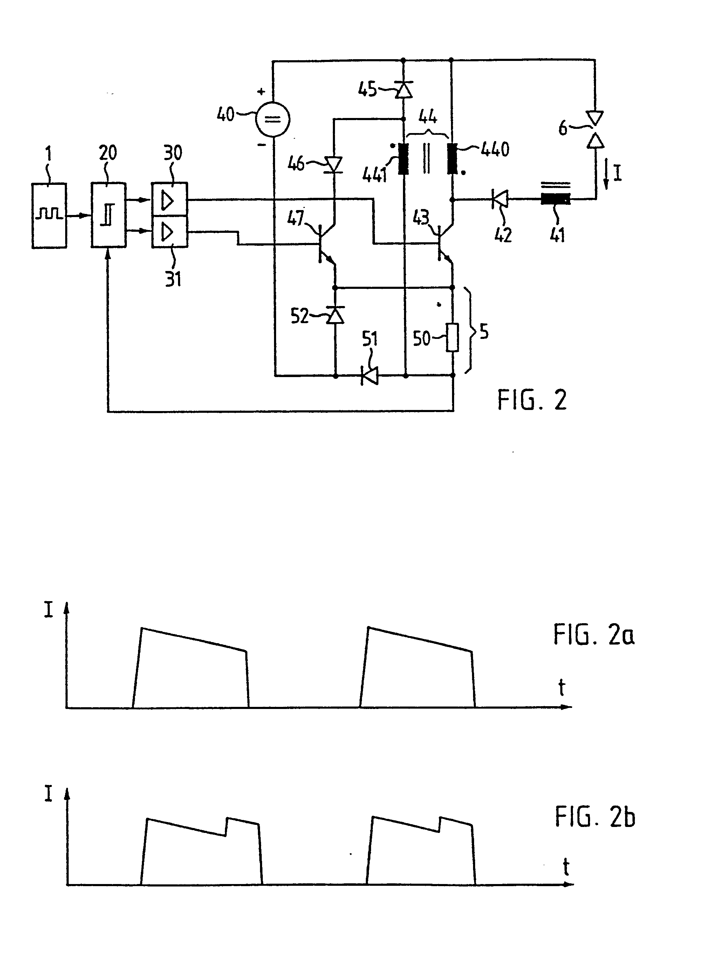

Fig. 2 zeigt ein modifiziertes Ausführungsbeispiel. Es wird über eine weitere Diode 46 und ein weiteres Schaltelement 47 und über den Stromsensor 50 die zweite Wicklung 441 kurzgeschlossen. Damit wird bei geschlossenem Schaltelement 47, und geöffnetem Schaltelement 43 die Stromabfallgeschwindigkeit des Stromes I in Ampere/Mikrosekunde nur noch proportional zur Funkenspannung in Volt in der Funkenstrecke 6, und umgekehrt proportional zur Induktivität 41 in Mikrohenry. Mit dieser Massnahme wird eine Rekuperation in die Gleichspannungsquelle 40 verhindert, und die Energie aus der Induktivität 41 wird ausschliesslich in der Funkenstrecke 6 umgesetzt, solange das Schaltelement 47 geschlossen bleibt. Unvermeidliche Verluste in den Leitungen, Dioden, Schaltelementen und Transformatoren sind vergleichsweise gering. Nur sie bestimmen jedoch im wesentlichen den Wirkungsgrad der Schaltung.

Ein Hauptvorteil des beschriebenen Impulsgenerators gegenüber den vielen bekannten Impulsgeneratoren besteht darin, dass während der Impulspausen keinerlei Strom im Leistungsteil zirkuliert, und damit auch keine Leistungsverluste auftreten können. Dies ist zum Beispiel beim Drahtschneiden besonders wichtig, da dort die Impulspause typisch 90 % der gesamten Impulsperiode beträgt.

Die Ansteuerung der Schaltelemente 43, 47 erfolgt in gleicher Weise über zwei identische Treiber 30, 31. Für Impulse nach Fig. 2a wird ein Vergleicher 20 verwendet, der auch als Zweipunktregler arbeitet, jedoch bei einem ersten Sollwert das Schaltelement 43 ausschaltet, und unterhalb einem zweiten, höheren Sollwert das Schaltelement 47 eingeschaltet hält.

Enthält der Vergleicher 20 zwei Zeitpunktregler, ergeben sich Impulszüge gemäss Fig. 2b. Der erste Zweipunktregler arbeitet in der bei Fig. 1b beschriebenen Weise und bedient das Schaltelement 43. Der zweite Zweipunktregler schaltet das Schaltelement 47 unterhalb dem Ausschaltsollwert des Schaltelementes 43 ein und bei einem höheren Sollwert aus. Im übrigen kann der Vergleicher 20 gleich aufgebaut sein wie der Vergleicher 2 (Fig. 1). Der Sollwertgenerator 1 braucht nicht unbedingt drei verschiedene Sollwerte auszugeben. Es genügt auch nur ein einziger, wobei dann die drei verschiedenen Pegel mit Hilfe von Spannungsteilern abgeleitet werden können.

Beim Betrieb der Schaltung nach Fig. 2b können auch sehr komplizierte Sollwertsignale reproduziert werden, etwa Impulse mit mäanderförmigen Überlagerungen, wie sie teilweise für die funkenerosive Senkbearbeitung eingesetzt werden. Diese Schaltungsvariante hat den grossen Vorteil, dass bei grosser Flankensteilheit des Stromes I auch längere Impulse bei vergleichsweise tiefer Schaltfrequenz der Schaltelemente 43, 47 erzeugt werden können. Eine tiefere Schaltfrequenz gibt naturgemäss kleinere Kommutationsverluste, was sich wiederum günstig auf den Wirkungsgrad des Impulsgenerators auswirkt.

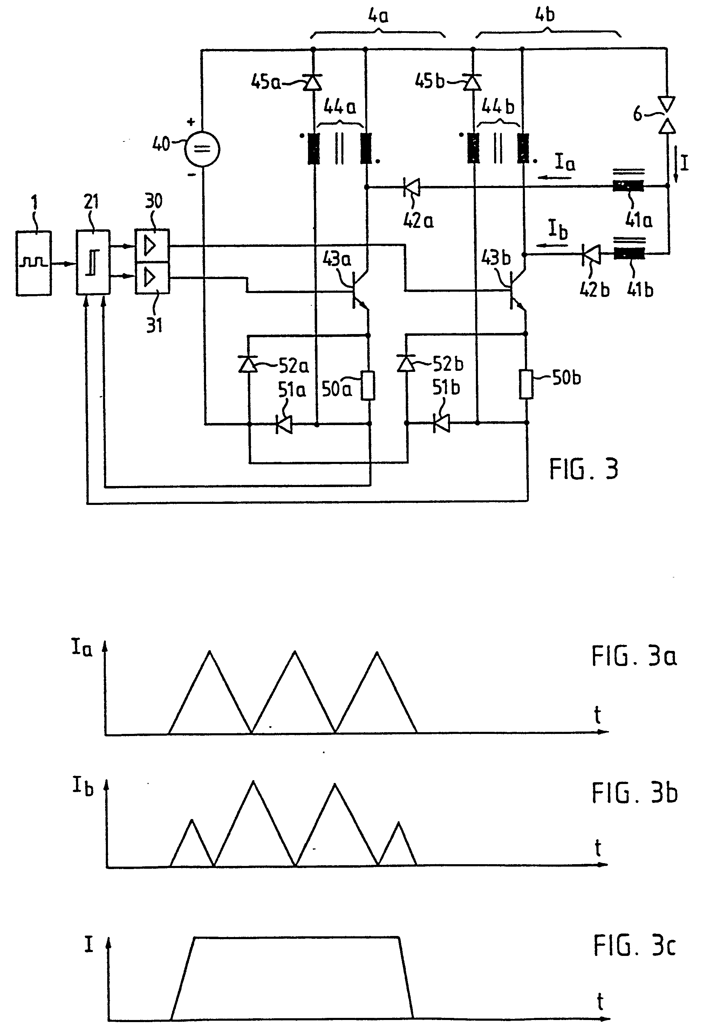

Die in Fig. 3 gezeigte Variante verfolgt denselben Zweck. Sie besteht im wesentlichen aus zwei parallel geschalteten Generatorabschnitten 4a und 4b. Jeder Generatorabschnitt 4a, 4b stimmt im wesentlichen mit dem in Fig. 1 erläuterten Generatorabschnitt 4 überein. Die Elemente der beiden Generatorabschnitte 4a, 4b sind deshalb mit den gleichen Bezugsziffern versehen wie die entsprechenden Elemente im Generatorabschnitt 4 - sowie zusätzlich noch mit dem Index "a" oder "b", und zwar je nach Zugehörigkeit zum Generatorabschnitt 4a oder 4b. Im übrigen werden die beiden Generatorabschnitte 4a, 4b von derselben gemeinsamen Gleichspannungsquelle 40 versorgt.

Eine zusätzliche Verbesserung des Generatorwirkungsgrades lässt sich erreichen, wenn die beiden Schaltelemente (43a, 43b) erst wiedereingeschaltet werden, nachdem die beiden Dioden (45a, 45b) keinen Strom mehr führen. Dies verhindert beträchtliche Kommutationsverluste. Ein zusätzlicher Vorteil ergibt sich, wenn bei Erosionsbedingungen, das heisst bei einer Funkenspannung von ungefähr 25 Volt, das Übersetzungsverhältnis der beiden Hochfrequenztransformatoren 44a, 44b gerade so gewählt wird, dass gleiche Impulsanstiegs- und -abfallzeiten entstehen. Dies ergibt im Idealfall, wie aus Fig. 3a, 3b und 3c ersichtlich, keine Welligkeit auf dem Strom I. Auch wird der resultierende Stromanstieg gerade doppelt so steil wie derjenige der Einzelströme 1a, 1b.

Zwischen den Sollwertgenerator 1 und die beiden Treiber 30, 31 ist wiederum ein Vergleicher 21 geschaltet und ebenfalls aus zwei Zweipunktreglern aufgebaut, die jedoch noch weiteren Bedingungen genügen müssen. Für den Generatorabschitt 4a ist mit Vergleicher 21 ein erster Komparator vorgesehen, der eine bistabile Kippstufe rücksetzt wenn der Strom Ia im Stomsensor 50a den Sollwert vom Sollwertgenerator 1 überschreitet, sowie ein zweiter Komparator, welcher die Kippstufe setzt, wenn der Strom Ia mindestens annähernd Null geworden ist, und der Sollwertgenerator 1 einen Sollwert grösser als Null aussendet. Für den Generatorabschnitt 4b ist im Vergleicher 21 genau die gleiche Schaltung nochmals vorhanden, mit dem Zusatz, dass ein weiterer Komparator, welcher die Summe der Einzelströme 1a, 1b mit dem Sollwert vergleicht, und beim Überschreiten des Sollwertes die bistabile Kippstufe ebenfalls rücksetzen kann. Damit wird auf einfachste Weise der Gleichtaktbetrieb der beiden Generatorabschnitte 4a, 4b zu Beginn des Impulses in einen Gegentaktbetrieb während des Impulses überführt. Die weiteren Elemente dieser Schaltungsvariante entsprechen jenen in Fig. 1 und Fig. 2 und haben genau dieselben Funktionen.

Diese Schaltungsvariante ist besonders geeignet für funkenerosive Grobbearbeitung im Senkverfahren, wo lange Impulse hoher Stromstärke und steilen Impulsflanken verlangt werden.

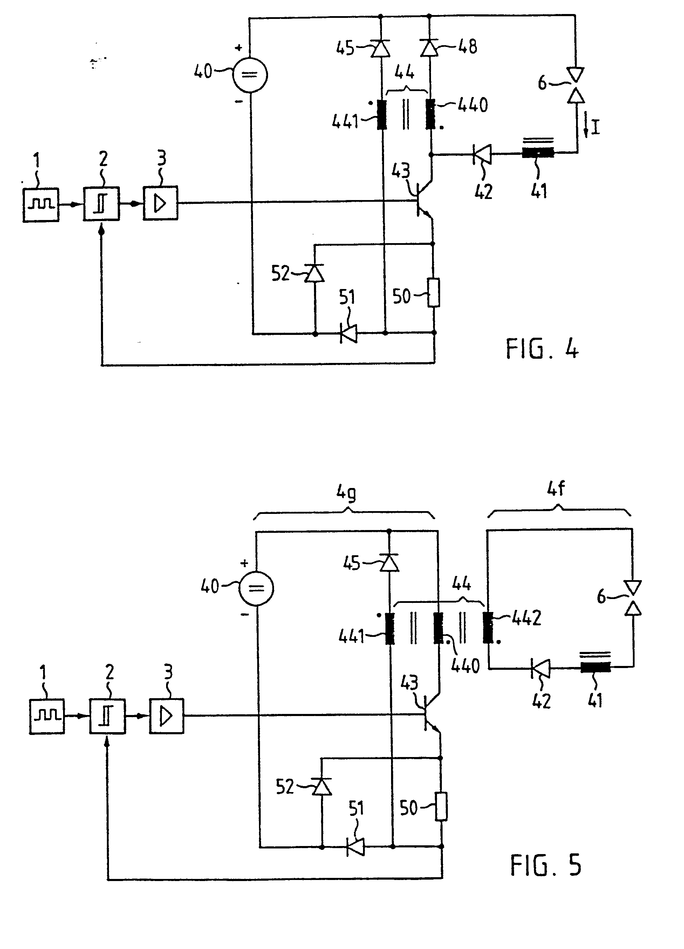

Fig. 4 zeigt eine weitere Variante des Ausführungsbeispiels nach Fig. 1. Der einzige Unterschied besteht in einer der ersten Wicklung 440 nachgeschalteten Diode 48, welche einen Stromfluss von der die Gleichspannungsquelle 40 und die Funkenstrecke 6 verbindenden Leitung zur ersten Wicklung 440 verhindert und eingeführt wurde, um beliebig lang dauernde Spannungsimpulse auf die Funkenstrecke 6 bringen zu können. Die Diode 48 verhindert eine Sättigung des Hochfrequenztransformators 44 während der Einschaltdauer des Schalterelementes 43.

Der bevorzugte Anwendungsbereich dieser Variante liegt beim Drahtschneiden, wo sie zur Erzeugung einer vom Hauptgenerator unabhängigen Gleichspannungskomponente für die Kompensation der Erosionskräfte auf die Drahtelektrode besonders geeignet ist. Auch hier ergeben sich, verglichen mit sonst üblichen Impulsgeneratoren, Einsparungen von mehreren hundert Watt.

Fig. 5 schliesslich zeigt eine Variante des Beispiels nach Fig. 1, mit dem einzigen Unterschied, dass eine dritte Wicklung 442 am Hochfrequenztransformator 44 vorgesehen ist. Die Funkenstrecke 6, die Induktivität 41 und die Diode 42 sind nur an diese Wicklung 442 angeschlossen. Damit ergibt sich eine galvanische Trennung zwischen dem Impulsgenerator 4g und dem funkenerosiven Kreis 4f. Diese Einrichtung lässt sich nun mit jeder der vorhergehenden Varianten ausser mit jener der Fig. 4 kombinieren. Sie kann somit an jeden denkbaren Anwendungsfall angepasst werden. Der grosse Vorteil einer solchen galvanisch getrennten Einrichtung liegt darin, dass der Impulsgenerator direkt mit der gleichgerichteten Netzspannung betrieben werden kann. Durch Wegfall von Speisegeräten, die unter dem Einfluss der Netzfrequenz stehen, ergibt sich eine bedeutende Einsparung an Kosten, Gewicht, Baugrösse und nicht zuletzt eine weitere Erhöhung des Wirkungsgrades des Generators.

Wie schon erwähnt, lassen sich verschiedene Schaltungsvarianten miteinander kombinieren, um die optimalste Lösung für unterschiedliche Anwendungsfälle zu erhalten.

**Patentansprüche**

1. Impulsgenerator zur funkenerosiven Metallbearbeitung mit
a) einem Sollwertgenerator (1), einem Vergleicher (2, 20; 21) und einem Treiber (3; 30; 31), dessen Steuerausgang zur Steuerung des Stromflusses von einer Gleichspannungsquelle (40) über einen Generatorabschnitt (4, 4a,b) auf eine Funkenstrecke (6) mit einem Steuereingang eines oder mehrerer Schaltelemente (43; 43a,b) im Generatorabschnitt (4; 4a,b) verbunden ist,
dadurch gekennzeichnet, dass
b) zum Schalten eines ersten Schaltelementes (43; 43a,b) der Ausgang der Funkenstrecke (6) über eine im Generatorabschnitt (4; 4a,b) vorgesehene Induktivität (41, 41a,b),eine erste Diode (42; 42a,b), das erste Schaltelement (43; 43a,b), einen Stromsensor (50; 50a,b) und eine zweite Diode (51; 51a,b) auf die eine Klemme (-) der Gleichspannungsquelle (40) und gleichzeitig der Signalausgang des Stromsensors (50; 50a,b) auf einen Eingang des Vergleichers (2; 20; 21) geschaltet ist,
c) der Vergleicher (2; 20; 21) derart ausgelegt ist, dass er nach Erreichen eines ersten Sollwertes des vom Stromsensor (50; 50a,b) gemessenen Stromes an den Treiber (3; 30; 31) ein Ausschaltsignal für das erste Schaltelement (43; 43a,b) abgibt,
d) im Generatorabschnitt (4; 4a,b) der Ausgang der ersten Diode (42; 42a,b) zusätzlich über eine erste Wicklung (440; 440a,b) eines Hochfrequenztransformators (44; 44a,b) gleichzeitig zum Eingang der Funkenstrecke (6) und zur anderen Klemme (+) der Gleichspannungsquelle zurückgeführt ist, so dass der Strom (I; Ia,b) nach Abschalten des ersten Schaltelementes (43; 43a,b) über die Funkenstrecke (6), die Induktivität (41; 41a,b), die erste Diode (42; 42a,b) und die erste Wicklung (440; 440a,b) weiterzirkulieren kann,
e) die eine Klemme (-) der Gleichspannungsquelle (40) im Generatorabschnitt (4; 4a,b) über eine der zweiten Diode (51; 51a,b) nachgeschaltete dritte Diode (52; 52a,b), den Stromsensor (50; 50a,b), eine zweite Wicklung (441; 441a,b) des Hochfrequenztransformators (44; 44a,b) und eine vierte Diode (45; 45a,b) zur anderen Klemme (+) der Gleichspannungsquelle (40; 40a,b) zurückgeführt ist, so dass die in der Induktivität (41; 41a,b) gespeicherte Energie in die Gleichspannungsquelle (40) zurückgeladen wird, wobei die Stromrichtung im Stromsensor (50; 50a,b) die gleiche ist, wie im durchgeschalteten Zustand des ersten Schaltelements (43; 43a,b) und
f) das Windungszahlverhältnis der ersten Wicklung (440; 440a,b) zur zweiten Wicklung (441; 441a,b) des Hochfrequenztransformators (44; 44a,b) entsprechend der gewünschten Steilheit der abfallenden Flanke des Stromes (I; Ia,b) eingestellt ist.

2. Impulsgenerator nach Anspruch 1, dadurch gekennzeichnet, dass
a) ein weiteres Schaltelement (46, 47) zum Kurzschliessen der zweiten Wicklung (441) des Hochfrequenztransformators (44) über den Stromsensor (50) vorgesehen ist derart, dass bei Kurzschluss die Stromrichtung im Stromsensor (50) die gleiche ist wie bei durchgeschaltetem ersten Schaltelement (43) und
b) der Vergleicher (20) derart ausgelegt ist, dass er ein Durchschaltsignal über den ihm zusätzlich nachgeschalteten zweiten Treiber (31) an das weitere Schaltelement (46, 47) abgibt, wenn der Strom (I) kleiner als ein zweiter Sollwert geworden ist, wobei dieser zweite Sollwert grösser ist als der erste Sollwert.

3. Impulsgenerator nach Anspruch 1 oder 2, dadurch gekennzeichnet, daß der Vergleicher (2; 20; 21) derart ausgelegt ist, dass er über den ihm nachgeschalteten Treiber (3; 30; 31) während eines Impulses stets dann ein Durchschaltsignal an das erste Schaltelement (43; 43a,b) abgibt, wenn der Strom (I) kleiner als ein dritter Sollwert geworden ist, wobei dieser dritte Sollwert kleiner als der erste Sollwert ist.

4. Impulsgenerator nach wenigstens einem der vorstehenden Ansprüche, dadurch gekennzeichnet, dass ein zum erstgenannten Generatorabschnitt (4a) identischer weiterer Generatorabschnitt (4b) vorgesehen ist, beide Generatorabschnitte (4a,b) parallel zueinander geschaltet sind, aus der einen Gleichspannungsquelle (40) auf die eine Funkenstrecke (6) arbeiten und hierbei auch die Ausgänge der beiden Stromsensoren (50a, 50b) mit zwei Eingängen des Vergleichers (21) und je ein Ausgang des Vergleichers (21) über eine Treiberstufe (30, 31) jeweils ein erstes Schaltelement (43a, 43b) der beiden Generatorabschnitte (4a,b) derart schaltet, dass während eines Impulses bis zum Erreichen des ersten Sollwertes des Stromes (I) beide ersten Schaltelemente (43a, 43b) eingeschaltet werden und danach im Gegentaktbetrieb bis zum Ende des Impulses ein- und ausgeschaltet werden und hierbei die Teilströme (Ia, Ib) der beiden Generatorabschnitte (4a, 4b) zwischen Null und dem ersten Sollwert des Stromes (I) pendeln; ferner, dass das Windungszahlverhältnis der beiden Hochfrequenztransformatoren (44a, 44b) derart gewählt ist, dass unter Erosionsbedingungen die Anstiegszeit und die Abfallzeit des Stromes (Ia, Ib) gleich gross werden.

5. Impulsgenerator nach wenigstens einem der vorstehenden Ansprüche, dadurch gekennzeichnet, dass eine weitere Diode (48) in Richtung der Verbindungsleitung zwischen der anderen Klemme (+) der Gleichspannungsquelle (40) und dem Eingang der Funkenstrecke (6) der ersten Wicklung (440) des Hochfrequenztransformators (44) in Serie nachgeschaltet ist, so dass diese Diode (48) bei ausgeschaltetem ersten Schaltelement (43) den Strom (I) leitet, bei durchgeschaltetem ersten Schaltelement (43) jedoch einen Stromfluss in Richtung von der Diode (48) zur ersten Wicklung (440) des Hochfrequenztransformators (44) blockiert.

6. Impulsgenerator nach wenigstens einem der Ansprüche 1 bis 4, dadurch gekennzeichnet, dass der Hochfrequenztransformator (44) eine dritte Wicklung (442) aufweist, die Funkenstrecke (6) über die Induktivität (41) und die erste Diode (42) nur mit dieser dritten Wicklung (442) galvanisch verbunden ist derart, dass die erste Diode (42) den Strom nur leitet, wenn das erste Schaltelement (43) durchgeschaltet ist und die Funkenstrecke (6) gezündet hat.

**Claims**

1. Pulse generator for the spark erosion machining of metal having

(a) a reference value generator (1), a comparator (2, 20; 21) and a drive means (3; 30; 31), the control output of which, for controlling the current flow from a DC voltage source (40), is coupled, by way of a generator section (4; 4a,b) arranged across a spark gap (6), to a control input of one or more switch elements (43; 43a,b) in the generator section (4; 4a,b); characterised in that

(b) to switch the or a first one of the switch element(s) (43; 43a,b), the output of the spark gap (6) is connected, by way of an inductance (41, 41a,b) provided in the generator section (4; 4a,b), a first diode (42; 42a,b), the or the first switch element (43; 43a,b), a current sensor (50; 50a,b) and a second diode (51; 51a,b), to one terminal (-) of the DC voltage source, (40) the signal output of the current sensor (50; 50a,b) being connected to an input of the comparator (2; 20; 21);

(c) the comparator (2; 20; 21) is designed in such a way that, once a first reference value of the current measured by the current sensor (50; 50a,b) has been reached, it transmits a switch-off signal for the or the first switch element (43; 43a,b) to the drive means (3; 30; 31);

(d) in the generator section (4; 4a,b), the output of the first diode (42; 42a,b) is returned to both the input of the spark gap (6) and to the other terminal (+) of the DC voltage source by way of a first winding (440; 440a,b) of a high-frequency transformer (44; 44a,b), so that after disconnecting the or the first switch element (43; 43a,b) the current (I; Ia,b) can circulate further by way of the spark gap (6), the inductance (41; 41a,b), the first diode (42; 42a,b) and the first winding (440; 440a,b);

(e) the one terminal (-) of the DC voltage source (40) in the generator section (4; 4a,b) is returned to the other terminal (+) of the DC voltage source (40; 40a,b), by way of a third diode (52; 52a,b) connected downstream of the second diode (51; 51a,b), the current sensor (50; 50a,b), a second winding (441; 441a,b) of the high-frequency transformer (44; 44a,b) and a fourth diode (45; 45a,b), so that the energy stored in the inductance (41; 41a,b) is resupplied to the DC voltage source (40), the current direction in the current sensor (50; 50a,b) being the same as in the conductive condition of the or the first switch element (43; 43a,b); and

(f) the ratio of the number of turns of the first winding (440; 440a,b) to the second winding (441; 441a,b) of the high-frequency transformer (44; 44a,b) is adjusted according to the desired steepness of the trailing edge of the current (I; Ia,b).

2. Pulse generator according to claim 1, characterised in that

(a) there is provided a further switch element (46, 47) for short-circuiting the second winding (441) of the high-frequency transformer (44) by way of the current sensor (50) in such a manner that with a short circuit the current direction in the current sensor (50) is the same as with the first switch element (43) when conductive; and

(b) the comparator (20) is designed in such a way that it transmits a conduction signal, by way of the second drive means (31) connected downstream of it, to the further switch element (46, 47) if the current (I) has become less than a second reference value, this second reference value being greater than the first reference value.

3. Pulse generator according to claim 1 or 2, characterised in that the comparator (2; 20; 21) is designed in such a way that, during a pulse, it transmits a conduction signal constantly to the first switch element (43; 43a,b), by way of the drive means (3; 30; 31) connected downstream of it, if the current (I) has become less than a third reference value, this third reference value being less than the first reference value.

4. Pulse generator according to at least one of the preceding claims, characterised in that there is provided a further generator section (4b) identical to the first mentioned generator section (4a), the generator sections (4a,b) being connected in parallel with one another and operating from the one DC voltage source (40) across the one spark gap (6), wherein also the outputs of the current sensors (50a, 50b) are connected respectively with two inputs of the comparator (21), and the outputs of the comparator (21) are connected respectively, by way of a drive stage (30, 31), with first switch elements (43a, 43b) of the generator sections (4a,b), in such a way that during a pulse both of the first switch elements (43a, 43b) are switched on until the first reference value of the current (I) is reached, and are the switched on and off in push-pull operation until the end of the pulse, whereby the partial currents (Ia, Ib) of both the generator sections (4a, 4b) oscillate between nil and the first rererence value of the current (I);

and in that the ratio of the number of turns of both the high-frequency transformers (44a, 44b) is selected in such a way that the rise time and fall time of the current (Ia, Ib) have the same magnitude under erosion conduitions.

5. Pulse generator according to at least one of the preceding claims, characterised in that a further diode (48) is connected in series after the first winding (440) of the hith-frequency transformer (44) and is directed to the connecting line between the other terminal (+) of the direct voltage source (40) and the input of the spark gap (6) so that this (futher) diode (48) conducts the current (1) with the first switch element (43) switched off, but, with the or the first switch element (43) in a conductive state, a current flow in the direction from the diode (48) to the first winding (440) of the high-frequency transformer (44) is prevented.

6. Pulse generator according to at least one of claims 1 to 4, characterised in that the high-frequency transformer (44) has a third winding (442) (and in that) the spark gap (6), by way of the inductance (41) and the first diode (42), is conductively connected only to this third winding (442), in such a way that the first diode (42) only conducts the current if the first switch element (43) is in the conductive state and the spark gap (6) has sparked.

**Revendications**

1. Générateur d'impulsionspour l'usinage de métaux par étincelage érosif avec

a) un générateur de valeur de consigne (1), un comparateur (2, 20; 21) et un circuit d'attaque (3; 30; 31) dont la sortie de commande pour l'écoulement d'un courant d'une source de tension continue (40) par une partie de générateur (4, 4a,b) vers un éclateur (6) est commecté à une entrée de commande d'un ou de plusieurs éléments commutateurs (43, 43a,b) dans la partie de générateur (4; 4a,b), caractérisé en ce que,

b) pour la commutation d'un premier élément. commutateur (43, 43a,b) la sortie de l'éclateur (6) est raccordée par une inductance (41, 41a,b) prévue dans la partie de générateur (4; 4a,b), une première diode (42; 42a,b), le premier élément commutateur (43; 43a,b), un détecteur de courant (50, 50a,b) et une deuxième diode (51, 51a,b) à une borne (-) de la source de tension continue (40) et simultanément la sortie de signal du détecteur de courant (50; 50a,b) est reliée a la sortie du comparateur (2; 20; 21),

c) le comparateur (2; 20; 21) est conçu tel qu'après avoir atteint une première valeur de consigne du courant mesuré par le détecteur du courant (50; 50a,b) émet vers le circuit d'attaque (3; 30; 31) un signal de mise hors circuit pour le premier élément commutateur (43; 43a,b),

d) dans la partie de générateur (4, 4a,b) la sortie de la première diode (42; 42a,b) est de plus ramenée par un premier enroulement (440; 440a,b) d'un transformateur à haute fréquence (44; 44a,b) simultanément à l'entrée de l'éclateur (6) et à l'autre borne (+) de la source de tension continue, de façon que le courant (I; Ia,b) puisse continuer à circuler, après mise hors circuit du premier élément commutateur (43; 43a,b), par l'éclateur (6), l'inductance (41; 41a,b), la première diode (42, 42a,b) et le premier enroulement (440; 440a,b),

e) la borne (-) de la source de tension continue, (40) dans la partie de générateur (4; 4a,b) est amenée par une troisième diode (52; 52a,b) située en aval de la deuxième diode (51; 51a,b), le détecteur de courant (50; 50a,b), un deuxième enroulement (441; 441a,b) du transformateur à haute fréquence (44, 44a,b) et une quatrième diode (45; 45,a,b) à l'autre borne (+) de la source de tension continue (40; 40a,b), de façon que l'énergie stockée dans l'inductance (41; 41a,b) soit rechargée à la source de tension continue (40), auquel cas le sens du courant dans le détecteur (50; 50a,b) est le même qu'à l'état de conduction du premier élément commutateur (43; 43a,b) et

f) le rapport du nombre de spires du premier enroulement (440; 440a,b) au deuxième enroulement (441; 441a,b) du transformateur à haute fréquence (44; 44a,b) est réglé suivant l'inclinaison souhaitée du flanc descendant du courant (I; Ia,b).

2. Générateur d'impulsions selon la revendication 1, caractérisé en ce que

a) un autre élément commutateur (46, 47) est prévu pour court-circuiter le second enroulement (441) du transformateur à haute fréquence (44) par l'intemédiaire du détecteur de courant (50), de telle sorte qu'au court-circuit le sens de courant dans le détecteur (50) soit le même dans le premier élément commutateur (43) qu'à l'état passant et

b) le comparateur (20) est conçu de telle façon qu'il émet un signal de passage par l'intermédiaire du circuit d'attaque (31) qui lui est supplémentairement raccordé en aval à l'autre élément commutateur (46, 47) si le courant (I) est devenu plus petit qu'une deuxième valeur de consigne cette deuxième valeur de consigne étant plus grande que la première valeur de consigne.

3. Générateur d'impulsions selon la revendication 1 ou 2, caractérisé en ce que le comparateur (2; 20; 21) est conçu de telle sorte qu'il émet toujours pendant une impulsion, par l'intermédiaire du circuit d'attaque (3; 30; 31) qui lui est raccordé en aval, un signal de passage au premier élément commutateur (43; 43a,b) quand le courant (I) est devenu plus petit qu'une troisième valeur de consigne, cette troisième valeur de consigne étant plus petite que la première valeur de consigne

4. Générateur d'impulsions selon au moins une des revendications précédentes, caractérisé en ce qu'il est prévu une autre partie de générateur (4b) identique à la partie de générateur (4a) citée en premier lieu, que les deux parties de générateur (4a,b) sont raccordées en parallèle, agissent à partir de la source de tension continue (40) sur l'éclateur (6) et de cette manière raccordent aussi les sorties des deux détecteurs de courant (50a,b) aux deux entrèes du comparateur (21), qu'une sortie du comparateur (21) par l'intermédiaire d'un étage du circuit d'attaque (30, 31) commute respectivement un premier élément commutateur (43a,43b) des deux parties de générateur (4a,b) de telle sorte que pendant une impulsion jusqu'à ce que la première valeur prescrite du courant (I) soit atteinte, les deux premiers éléments commutateurs sont mis en circuit, puis mis en et hors circuit en régime push-pull jusqu'à la fin de l'impulsion, les courants partiels (Ia, Ib) des deux parties de générateur (4a, 4b) oscillant entre zéro et la première valeur de consigne du courant (I); en outre, que le rapport du nombre de spires des deux transformateurs à haute fréquence (44a, 44b) sont choisis de telle sorte que sous les conditions d'érosion, le temps de montée et le temps de descente du courant (Ia,Ib) deviennent égaux.

5. Générateur d'impulsions selon au moins une des revendications précédentes, caractérisé en ce qu'une autre diode (48) est branchée en série dans le sens de conduction du raccordement entre l'autre borne (+) de la source de tension continue (40) et l'entrée de l'éclateur (6) en aval du premier enroulement (440) de transformateur à haute fréquence (44), de telle sorte que cette diode (48) conduit le courant (1) pendant la mise hors circuit du premier élément commutateur (43) mais lorsque le premier élément commutateur (43) étant mis en circuit, bloque la circulation du courant dans le sens de la diode (48) vers le premier enroulement (440) du transformateur à haute fréquence (44).

6. Générateur d'impulsion selon au moins une des revendications 1 à 4, caractérisé en ce que le transformateur à haute fréquence (44) présente un troisième enroulement (442), que l'éclateur (6) n'est connecté galvaniquement par l'intermédiaire de l'inductance (41) et de la première diode (42) qu'à ce troisième enroulement (442), de sorte que la première diode (42) ne conduit le courant que lorsque le premier élément commutateur (43) laisse passer le courant et l'éclateur est allumé.

FIG. 1

FIG. 1a

FIG. 1b

FIG. 2

FIG. 2a

FIG. 2b

FIG. 3

FIG. 3a

FIG. 3b

FIG. 3c

FIG. 4

FIG. 5